# EUROPEAN PATENT APPLICATION

(11) **EP 3 562 106 A1**
(43) Date of publication of application: **30.10.2019**
(21) Application number: 17894179.5
(22) Date of filing: 25.01.2017
(51) Int. Cl.: H04L 12/54

(54) **SIGNAL TRANSMISSION CHANNEL PROCESSING METHOD, DEVICE, AND SYSTEM**

(71) Applicant: Huawei Technologies Co., Ltd., Longgang District Shenzhen, Guangdong 518129 (CN)
(72) Inventor: WANG, Weiyang, Shenzhen Guangdong 518129 (CN)
(74) Representative: Körber, Martin Hans
(86) International application number: PCT/CN2017/072662
(87) International publication number: WO 2018/137192

(57) **Abstract**

Embodiments of the present invention provide a signal transmission channel processing method, an apparatus, and a system. The method includes: receiving, by a first transceiver, at least one portion of a K1^{th} logical frame from a second transceiver, where the at least one portion of the K1^{th} logical frame includes a first RMC message; if the RMC message cannot be correctly parsed, sending a K2^{th} logical frame to the second transceiver, where the K2^{th} logical frame includes a second RMC message, where the second RMC message is used to instruct the second transceiver to adjust RMC configuration of a transmit channel and RMC configuration of a receive channel of the second transceiver to preset configuration; and adjusting, by the first transceiver, RMC configuration of a transmit channel and RMC configuration of a receive channel to the preset configuration after a (K1+N)^{th} logical frame, where N is a preset positive integer. According to the method, data transmission can be recovered as soon as possible on a signal transmission channel.

## Description

### TECHNICAL FIELD

The present invention relates to the field of data communications, and specifically, to a signal transmission channel processing method, an apparatus, and a system.

### BACKGROUND

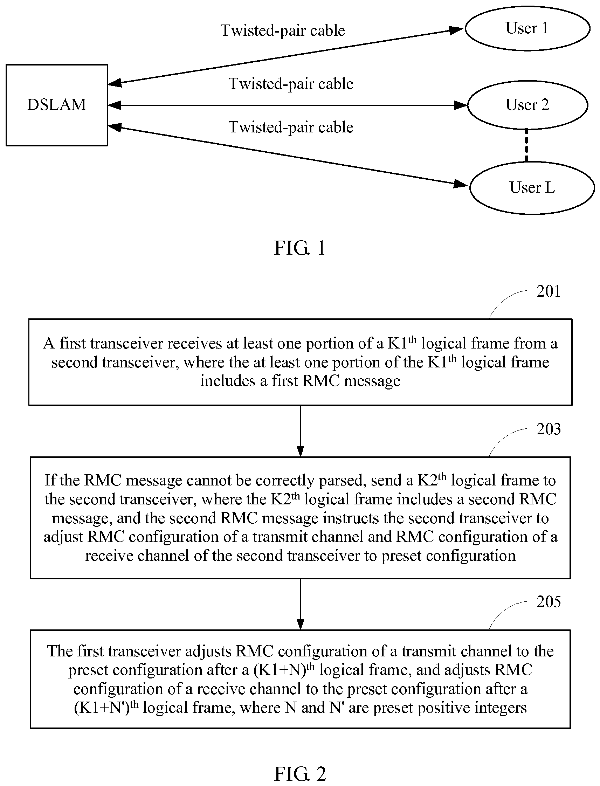

Digital subscriber line (DSL, Digital Subscriber Line) is a high-speed data transmission technology for transmission over a phone twisted-pair (Twisted Pair) cable. There are a plurality of DSL lines in a DSL system, and currently a DSL access multiplexer (DSLAM, Digital Subscriber Line Access Multiplexer) usually provides an access service for the plurality of DSL lines, as shown in FIG. 1. Generally, a location of the DSLAM is referred to as a central office (central office, CO) or a network side; and a location of a CPE is referred to as a CPE side or a user side. From a perspective of a network-side device, the network-side device may be referred to as a local device, and a user-side device is correspondingly referred to as a peer device, or vice versa. To meet requirements for high bandwidth in the society, a twisted-pair or copper cable channel needs to have a higher transmission capability, and the DSL technology keeps developing.

In a conventional DSL technology, frequency division multiplexing and duplex is usually used to avoid mutual interference between an uplink signal and a downlink signal because a transmission distance is relatively long and a spectrum is relatively narrow. For a new-generation copper broadband access technology G.fast, time division duplex (Time Division Duplex, TDD) needs to be used due to spectrum spread (a maximum frequency band is 250 MHz).

TDD is a type of half-duplex multiplexing, that is, all subcarriers of an entire frequency band are occupied to send information in an uplink or a downlink, and a system allocates a timeslot to send information separately. A transceiver at one end can only send or receive information in one timeslot, while a peer end can only do an opposite operation in the same timeslot. Parameters of a transmit channel and a receive channel of the transceiver at one end should be consistent with those of a transmit channel and a receive channel of the transceiver on the peer end. However, when an external environment causes a change in a line condition, making the transmit channel or the receive channel of the transceiver fail to work normally, how the transceivers on the two ends negotiate to recover the parameters becomes a problem to be resolved. An existing method is to reactivate the transceivers on the two ends to match each other. Because such reactivation takes time, data transmission may be delayed for a long time.

### SUMMARY

Embodiments of the present invention provide a signal transmission channel processing method, an apparatus, and a system, so as to recover data transmission as soon as possible on a signal transmission channel.

According to a first aspect, an embodiment of the present invention provides a signal transmission channel processing method, including:
receiving, by a first transceiver, a portion of a K1^{th} logical frame or an entire K1^{th} logical frame from a second transceiver, where the received portion of the K1^{th} logical frame or the received entire K1^{th} logical frame includes a first RMC message;
if the RMC message cannot be correctly parsed, sending a K2^{th} logical frame to the second transceiver, where the K2^{th} logical frame includes a second RMC message, and the second RMC message instructs the second transceiver to adjust RMC configuration of a transmit channel and RMC configuration of a receive channel of the second transceiver to preset configuration; and
adjusting, by the first transceiver, RMC configuration of a transmit channel to the preset configuration after a (K1+N)^{th} logical frame, and adjusting RMC configuration of a receive channel to the preset configuration after a (K1+N')^{th} logical frame, where N and N' are preset positive integers.

In a first possible implementation of the first aspect, the second RMC message is represented by one bit, and a specific value is used to instruct the second transceiver to adjust the RMC configuration of the transmit channel and the RMC configuration of the receive channel to the preset configuration.

With reference to the first aspect or the first possible implementation of the first aspect, in a second possible implementation, the first RMC message instructs the first transceiver to adjust the RMC configuration of the transmit channel and the RMC configuration of the receive channel of the first transceiver to the preset configuration; and the second transceiver adjusts the RMC configuration of the transmit channel to the preset configuration after the (K1+N')^{th} logical frame, and adjusts the RMC configuration of the receive channel to the preset configuration after the (K1+N)^{th} logical frame.

With reference to the first aspect, the first or second possible implementation of the first aspect, in a third possible implementation, in the preset configuration, higher robustness of a transmission channel is ensured by setting different parameters in at least one of three items: an RMC carrier set, an RMC bit loading table, or an RMC coding scheme.

With reference to the first aspect, the first, the second, or the third possible implementation of the first aspect, in a fourth possible implementation, the first RMC message includes a number of the K1^{th} logical frame.

With reference to the first aspect, the first, the second, the third, or the fourth possible implementation of the first aspect, in a fifth possible implementation, the second RMC message includes a number of the K2^{th} logical frame.

According to a second aspect, an embodiment of the present invention provides a transceiver, including a transmitter, a receiver, and a processor.

The receiver receives at least one portion of a K1^{th} logical frame from a peer device; where the at least one portion of the K1^{th} logical frame includes a first RMC message.

If the processor cannot correctly parse the RMC message received by the receiver, the processor instructs the transmitter to send a K2^{th} logical frame to the peer device, where the K2^{th} logical frame includes a second RMC message; and the second RMC message instructs the peer device to adjust RMC configuration of a transmit channel and RMC configuration of a receive channel of the peer device to preset configuration.

The processor adjusts RMC configuration of a transmit channel of the transmitter to the preset configuration after a (K1+N)^{th} logical frame, and adjusts RMC configuration of a receive channel of the receiver to the preset configuration after a (K1+N')^{th} logical frame, where N and N' are preset positive integers.

In a first possible implementation of the second aspect, the second RMC message is represented by one bit, and a specific value is used to instruct the peer device to adjust the RMC configuration of the transmit channel and the RMC configuration of the receive channel to the preset configuration.

With reference to the second aspect or the first possible implementation of the second aspect, in a second possible implementation of the second aspect, the first RMC message also includes instruction information, instructing the transceiver to adjust the RMC configuration of the transmit channel of the transmitter and the RMC configuration of the receive channel of the receiver to the preset configuration.

With reference to the second aspect, the first or second possible implementation of the second aspect, in a third possible implementation, in the preset configuration, higher robustness of a transmission channel is ensured by setting different parameters in at least one of three items: an RMC carrier set, an RMC bit loading table, or an RMC coding scheme.

According to a third aspect, an embodiment of the present invention provides a network system, including a network-side device and K user-side devices, where K > 1; the network-side device is connected to the K user-side devices by using K pairs of twisted-pair cables; the network-side device includes K network-side transceivers, and each user-side device includes one user-side transceiver, where either the network-side transceiver or the user-side transceiver is the foregoing transceiver.

In the solution described in the embodiments, regardless of which of an RMC transmit channel/receive channel of a transceiver on a network side or a user side is damaged, the first transceiver adjusts the RMC configuration of the transmit channel and the RMC configuration of the receive channel of the first transceiver to the preset configuration after the (K1+N)^{th} logical frame; and instructs the second transceiver to also adjust the RMC configuration of the transmit channel and the RMC configuration of the receive channel of the second transceiver to the preset configuration after the (K1+N)^{th} logical frame. The RMC receive channels and transmit channels on the first transceiver and the second transceiver may quickly match each other. In this way, a data channel can be further configured based on an RMC under normal communication, and data transmission can be recovered as soon as possible, so as to avoid long interruption of data transmission and improve user experience.

### BRIEF DESCRIPTION OF DRAWINGS

FIG. 1 is a schematic diagram of a network structure in a DSL system;
FIG. 2 is a schematic flowchart of a signal transmission channel processing method according to an embodiment of the present invention;
FIG. 3 is a schematic structural diagram of a transceiver according to an embodiment of the present invention;
FIG. 4 is a schematic structural diagram of a network system according to an embodiment of the present invention; and
FIG. 5 is a schematic structural diagram of a network component according to an embodiment of the present invention.

### DESCRIPTION OF EMBODIMENTS

The following describes technical solutions in the embodiments of the present invention with reference to the accompanying drawings in the embodiments of the present invention.

In a TDD mode, a transceiver at one end can only send or receive information in one timeslot, while a peer end can only perform an opposite operation in the same timeslot. A unit in uplink and downlink transmission may be referred to as a logical frame. In addition to a data symbol, each logical frame includes a special high-robustness symbol, and a subcarrier channel corresponding to the high-robustness symbol is usually used to carry special channel management information, so as to manage a channel for transmitting a data symbol, namely, a data channel. The high-robustness symbol is referred to as a robustness management channel (RMC) symbol, the subcarrier channel corresponding to the RMC symbol is referred to as an RMC, and a corresponding subcarrier is referred to as an RMC subcarrier. Generally, the RMC symbol has a bit loading (bit loading) parameter lower than that of another data symbol, so that the RMC symbol has characteristics such as robustness, a short delay, a high signal-to-noise ratio, and a low bit error rate, and this ensures transmission of most channel management information.

However, when an external condition affects a line, for example, at a moment the line is unplugged or inserted or when the line is shaking, a line transmission channel is greatly affected, and the RMC channel may also be damaged. Consequently, the RMC channel cannot be relied on to transmit information to adjust parameters of a transmit channel and a receive channel on a network side and a user side, and therefore the data channel cannot be recovered. It should be noted that in a scenario of signal transmission on the network side and the user side, a transmit channel on the network side is a receive channel on the user side, and a transmit channel on the user side is a receive channel on the network side.

As shown in FIG. 2, an embodiment of the present invention provides a signal transmission channel processing method, including the following steps.

S201. A first transceiver receives at least one portion of a K1^{th} logical frame from a second transceiver, where the at least one portion of the K1^{th} logical frame includes a first RMC message.

It should be noted that the first transceiver may be a transceiver on a user side or a transceiver on a network side, and then the second transceiver is a transceiver at a peer end, that is, a corresponding transceiver on the network side or the user side.

When a sudden change occurs in an external environment of a receive channel of the first transceiver, a channel parameter also changes greatly. As a result, a received signal may be a combined signal of a complete K1^{th} logical frame and a noise signal, or a combined signal of a portion of the K1^{th} logical frame and a noise signal, or a complete noise signal. The scenario in which the received signal is a complete noise signal is more special, and is not considered in this application.

S203. If the RMC message cannot be correctly parsed, send a K2^{th} logical frame to the second transceiver, where the K2^{th} logical frame includes a second RMC message, and the second RMC message instructs the second transceiver to adjust RMC configuration of a transmit channel and RMC configuration of a receive channel of the second transceiver to preset configuration.

K1 and K2 are count values of the logical frames received and sent by the first transceiver, and are positive integers. Correspondingly, the second transceiver also counts locally received and sent logical frames, and the counts at both ends are usually synchronized. Even if the counts at both ends are not synchronized, there is a fixed difference between the logical frame count values of the two transceivers, and by simple calculation, any transceiver may learn of a logical frame count value of a peer end based on a logical frame count value on the local end.

In the preset configuration, it is ensured that a communications channel has robustness higher than that of an RMC channel, and when a message received from the RMC channel cannot be correctly parsed, resulting in a high bit error rate, the message can be normally parsed on a channel in the preset configuration. Specific implementation is as follows: In the preset configuration, by setting different parameters in at least one of an RMC carrier set, an RMC bit loading table, or an RMC coding scheme, it can be ensured that a transmission channel achieves higher robustness; for example, setting a very low bit loading parameter bi (for example, bi = 2 is used for all), using a carrier with a larger range or with a higher signal-to-noise ratio SNR for the RMC carrier set, or using a coding scheme in which a same bit is repeatedly modulated on different carriers.

S205. The first transceiver adjusts RMC configuration of a transmit channel and RMC configuration of a receive channel to the preset configuration after a (K1+N)^{th} logical frame, where N is a preset positive integer.

Generally, the first or second transceiver triggers an RMC configuration adjustment process, and new RMC configuration may be switched to according to a preset time point. For example, the foregoing "after a (K1+N)^{th} logical frame", namely, "after N logical frames", may be preset on the two transceiver sides, and after the RMC configuration adjustment process is triggered, the preset configuration is switched to directly according to the time point. N is obtained through mutual negotiation at stages of handshake (handshake) and initialization (initialization) or specified by a third-party device (for example, a network management device); and after N is determined, N may also be synchronously updated at a data transmission (showtime) stage at both ends.

More specifically, if the first transceiver detects that the first transceiver cannot correctly parse the received RMC message, it indicates that an RMC receive channel of the first transceiver is damaged, and an RMC configuration adjustment process is triggered: After N logical frames, namely, after the (K1+N)^{th} logical frame, the first transceiver adjusts the RMC configuration of the transmit channel and the RMC configuration of the receive channel of the first transceiver to the preset configuration; and sends the K2^{th} logical frame to instruct the second transceiver to adjust the RMC configuration of the transmit channel and the RMC configuration of the receive channel of the second transceiver.

In an optional implementation, the second RMC message may be represented by one bit, that is, a specific value (0 or 1) is used to instruct the second transceiver to adjust the RMC configuration of the transmit channel and the RMC configuration of the receive channel to the preset configuration. Alternatively, a plurality of bits may be set to represent indication information, but a message with fewer bits is shorter and can be transmitted faster to the peer end. Optionally, the second RMC message includes a number of the K2^{th} logical frame, namely, K2.

Further, if the second transceiver can normally parse the RMC message, after receiving the second RMC message, the second transceiver adjusts the RMC configuration of the transmit channel and the RMC configuration of the receive channel of the second transceiver to the preset configuration after a (K2+N)^{th} logical frame.

In another optional implementation, the first RMC message also includes instruction information, instructing the first transceiver to adjust the RMC configuration of the transmit channel and the RMC configuration of the receive channel of the first transceiver to the preset configuration. If the first transceiver can normally parse the first RMC message, the RMC configuration adjustment process is triggered according to the instruction. After N logical frames, namely, after the (K1+N)^{th} logical frame, the first transceiver adjusts the RMC configuration of the transmit channel and the RMC configuration of the receive channel of the first transceiver to the preset configuration. If the first transceiver cannot correctly parse the received RMC message, it is determined also according to the foregoing description that the RMC receive channel of the first transceiver is damaged, and the RMC configuration adjustment process is triggered.

Like the second RMC message, the first RMC message may also be represented by one bit, and a specific value is used to instruct the first transceiver to adjust the RMC configuration of the transmit channel and the RMC configuration of the receive channel to the preset configuration. The first RMC message may alternatively be represented by a plurality of bits. Optionally, the first RMC message includes a number of the K1^{th} logical frame, namely, K1.

Further, the first RMC message includes the instruction information to instruct the first transceiver to trigger the RMC configuration adjustment process, because the second transceiver has triggered the RMC configuration adjustment process. A trigger condition may be that the second transceiver cannot correctly parse the received RMC message. After N logical frames after the K1^{th} logical frame is sent, namely, after the (K1+N)^{th} logical frame, the second transceiver adjusts the RMC configuration of the transmit channel and the RMC configuration of the receive channel of the second transceiver to the preset configuration.

Generally, the first or second transceiver triggers the RMC configuration adjustment process, and the new RMC configuration may be switched to according to the preset time point. For example, the foregoing "after N logical frames" may be preset on the two transceiver sides, and after the RMC configuration adjustment process is triggered, the preset configuration is switched to directly according to the time point.

According to the solution in this embodiment, regardless of which of the RMC transmit channel/receive channel of the transceiver on either the network side or the user side is damaged, the first transceiver adjusts the RMC configuration of the transmit channel and the RMC configuration of the receive channel of the first transceiver to the preset configuration after the (K1+N)^{th} logical frame. After either the (K1+N)^{th} logical frame or the (K2+N)^{th} logical frame, the second transceiver adjusts the RMC configuration of the transmit channel and the RMC configuration of the receive channel of the second transceiver to the preset configuration. Therefore, beginning from a max(K1+N, K2+N)^{th} logical frame, the RMC receive channels and the RMC transmit channels of the first transceiver and the second transceiver can quickly match each other. Usually, the RMC transmit channels and the RMC receive channels do not match each other within 16 logical frames (two superframes), and both transceivers can normally parse the received logical frame that includes the RMC message. In this way, a data channel can be further configured based on an RMC under normal communication, and data transmission can be recovered as soon as possible, so as to avoid long interruption of data transmission and improve user experience.

In another embodiment, step S205 may be replaced by step S205': The first transceiver adjusts the RMC configuration of the transmit channel to the preset configuration after the (K1+N)^{th} logical frame, and adjusts the RMC configuration of the receive channel to the preset configuration after a (K1+N')^{th} logical frame, where N' is a preset positive integer.

A scenario in which a value of N' is equal to a value of N corresponds to the embodiment shown in FIG. 2, and a scenario in which the value of N' is not equal to the value of N corresponds to an embodiment in which RMC configuration switching is performed after waiting for different time in an uplink and a downlink. The two values may be preset on the two transceiver sides. Generally, even if the value of N' is not equal to the value of N, a difference between them is not great.

Further, after step S205', if the second transceiver can normally parse the RMC message, after receiving the second RMC message, the second transceiver adjusts the RMC configuration of the transmit channel to the preset configuration after a (K2+N')^{th} logical frame, and adjusts the RMC configuration of the receive channel to the preset configuration after the (K2+N)^{th} logical frame. In this way, the transmit channels and the receive channels on the two ends can be correspondingly adjusted synchronously.

In an independent embodiment, when the second transceiver cannot correctly parse the received RMC message, the second transceiver also directly triggers the RMC configuration adjustment process. After sending N' logical frames after the K1^{th} logical frame is sent, namely, after the (K1+N')^{th} logical frame, the second transceiver adjusts the RMC configuration of the transmit channel of the second transceiver to the preset configuration, and after sending N logical frames, namely, after the (K1+N)^{th} logical frame, adjusts the RMC configuration of the receive channel of the second transceiver to the preset configuration.

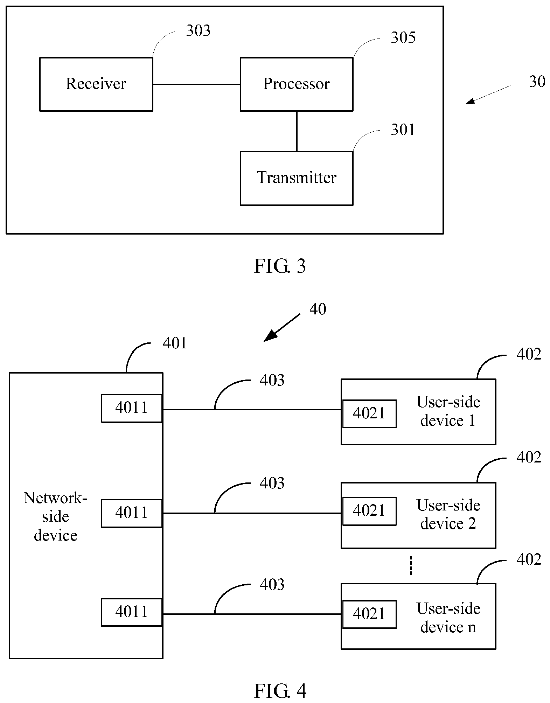

An embodiment of the present invention provides a transceiver 30. The transceiver 30 may be a transceiver on a network side or a user side, and as shown in FIG. 3, includes a transmitter 301, a receiver 303, and a processor 305.

The receiver 303 receives at least one portion of a K1^{th} logical frame from a peer device, where the at least one portion of the K1^{th} logical frame includes a first RMC message.

If the processor 305 cannot correctly parse the RMC message received by the receiver 303, the processor 305 instructs the transmitter 301 to send a K2^{th} logical frame to the peer device, where the K2^{th} logical frame includes a second RMC message, and the second RMC message instructs the peer device to adjust RMC configuration of a transmit channel and RMC configuration of a receive channel of the peer device to preset configuration.

The processor 305 adjusts RMC configuration of a transmit channel of the transmitter 301 to the preset configuration after a (K1+N)^{th} logical frame, and adjusts RMC configuration of a receive channel of the receiver 303 to the preset configuration after a (K1+N')^{th} logical frame, where N and N' are preset positive integers.

More specifically, if the processor 305 detects that the received RMC message cannot be correctly parsed, it indicates that an RMC receive channel of the receiver 303 in the transceiver is damaged, and an RMC configuration adjustment process is triggered: After N logical frames, namely, after the (K1+N)^{th} logical frame, the transceiver adjusts the RMC configuration of the transmit channel of the transceiver to the preset configuration; and after N' logical frames, namely, after the (K1+N')^{th} logical frame, the transceiver adjusts the RMC configuration of the receive channel of the transceiver to the preset configuration. Optionally, the transceiver further sends the K2^{th} logical frame to instruct the peer device to adjust the RMC configuration of the local transmit channel and the RMC configuration of the local receive channel.

In an optional embodiment, the second RMC message is represented by one bit, and a specific value (0 or 1) is used to instruct the peer device to adjust the RMC configuration of the transmit channel and the RMC configuration of the receive channel to the preset configuration. Alternatively, a plurality of bits may be set to act as indication information. Optionally, the second RMC message includes a number of the K2^{th} logical frame, namely, K2.

In another optional embodiment, the first RMC message also includes instruction information, instructing the transceiver to adjust the RMC configuration of the transmit channel of the transmitter 301 and the RMC configuration of the receive channel of the receiver 303 to the preset configuration. If the processor 305 of the transceiver can normally parse the first RMC message, the RMC configuration adjustment process is triggered according to the instruction information: After N logical frames, namely, after the (K1+N)^{th} logical frame, the transceiver adjusts the RMC configuration of the transmit channel of the transceiver to the preset configuration. After N' logical frames, namely, after the (K1+N')^{th} logical frame, the transceiver adjusts the RMC configuration of the receive channel of the transceiver to the preset configuration. If the received RMC message cannot be correctly parsed, it is determined, also according to the foregoing description, that the RMC receive channel of the receiver 303 in the transceiver is damaged, and the RMC configuration adjustment process is triggered.

Like the second RMC message, the first RMC message may also be represented by one bit, and a specific value is used to instruct the transceiver to adjust the RMC configuration of the transmit channel of the transmitter 301 and the RMC configuration of the receive channel of the receiver 303 to the preset configuration. Optionally, the first RMC message includes a number of the K1^{th} logical frame, namely, K1.

Further, the first RMC message includes the instruction information to instruct the transceiver to trigger the RMC configuration adjustment process, because the peer device has triggered the RMC configuration adjustment process. A trigger condition may be that the peer device cannot correctly parse the received RMC message.

According to the method in this embodiment, regardless of which of an RMC transmit channel/receive channel of the transceiver or the peer device is damaged, after the (K1+N)^{th} logical frame or the (K1+N')^{th} logical frame, the transceiver adjusts the RMC configuration of the transmit channel and the RMC configuration of the receive channel of the transceiver to the preset configuration. The peer device either performs RMC configuration switching as instructed by the transceiver or triggers a switching process. In this way, the RMC receive channels and transmit channels of the transceiver and the peer device can quickly match each other, and both ends can normally parse the received logical frame that includes an RMC message. In this way, a data channel can be further configured based on an RMC under normal communication, and data transmission can be recovered as soon as possible, so as to avoid long interruption of data transmission and improve user experience.

In this embodiment, the transmitter and the receiver are hardware logical interfaces or combinations of software and hardware. The processor may be a central processing unit (CPU) or another logical calculating unit. Processing methods of the components are basically consistent with those in the foregoing method embodiments. For specific content, refer to the method embodiments, and details are not described again.

An embodiment of the present invention further provides a network system 40, and as shown in FIG. 4, includes a network-side device 401 and K user-side devices 402, where K ≥ 1. The network-side device 401 is connected to the K user-side devices 402 by using K pairs of twisted-pair cables 403. The network-side device 401 includes K network-side transceivers 4011, and each user-side device 402 includes one user-side transceiver 4021. The network-side transceiver 4011 or the user-side transceiver 4021 is the transceiver 30 in the foregoing embodiment.

It should be further noted that a specific action performed by the network-side device is the method in the foregoing method embodiment, and specific steps are not described again.

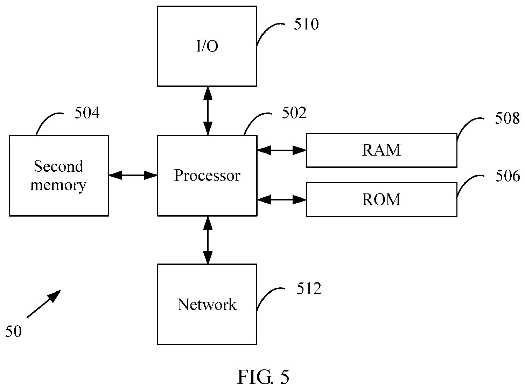

A person of ordinary skill in the art may understand that all or some of the steps of the method embodiments may be implemented by a program instructing related hardware. The program may be stored in a computer readable storage medium. When the program runs, the steps of the method embodiments are performed. The foregoing storage medium includes: any medium that may store program code, such as a ROM, a RAM, a magnetic disk, or an optical disc. Specifically, the foregoing network processing process may be implemented on a general component of, for example, a computer or a network component that has sufficient processing capabilities, memory resources, and network throughput capabilities. FIG. 5 shows an example of an electrical general network component 50 applicable to implementing one or more embodiments of components disclosed in this specification. The network component 50 includes a processor 502 (which may be referred to as a central processing unit or a CPU). The processor 502 communicates with storage devices including a second memory 504, a read-only memory (ROM) 506, a random access memory (RAM) 508, an input/output (I/O) device 510, and a network-connected device 512. The processor 502 may be implemented as one or more CPU chips, or implemented as a portion of one or more application-specific integrated circuits.

The second memory 504 typically includes one or more disk drives or disc drives and is used for non-volatile storage of data. In addition, if the RAM 508 is insufficient to store all operation data, the second memory 504 is used as a storage device for overflowed data. The second memory 504 may be configured to store programs that are loaded into the RAM 508 when they are selected for execution. The ROM 506 is configured to store an instruction or data that is read when the programs are executed. The ROM 506 is a non-volatile storage device. Typically, in relative to the second memory 504 with a relatively large storage capacity, a storage capacity of the ROM 506 is relatively small. The RAM 508 is configured to store volatile data and may store an instruction. Access to the ROM 506 and the RAM 508 is usually faster than access to the second memory 504.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A signal transmission channel processing method, comprising:
receiving, by a first transceiver, at least one portion of a K1^{th} logical frame from a second transceiver, wherein the at least one portion of the K1^{th} logical frame comprises a first RMC message;
if the RMC message cannot be correctly parsed, sending a K2^{th} logical frame to the second transceiver, wherein the K2^{th} logical frame comprises a second RMC message, and the second RMC message instructs the second transceiver to adjust RMC configuration of a transmit channel and RMC configuration of a receive channel of the second transceiver to preset configuration; and
adjusting, by the first transceiver, RMC configuration of a transmit channel to the preset configuration after a (K1+N)^{th} logical frame, and adjusting RMC configuration of a receive channel to the preset configuration after a (K1+N')^{th} logical frame, wherein N and N' are preset positive integers.

2. The method according to claim 1, wherein the second RMC message is represented by one bit, and a specific value is used to instruct the second transceiver to adjust the RMC configuration of the transmit channel and the RMC configuration of the receive channel to the preset configuration.

3. The method according to claim 1 or 2, wherein after receiving the second RMC message, the second transceiver adjusts the RMC configuration of the transmit channel to the preset configuration after a (K2+N')^{th} logical frame, and adjusts the RMC configuration of the receive channel to the preset configuration after a (K2+N)^{th} logical frame.

4. The method according to claim 1 or 2, wherein the first RMC message instructs the first transceiver to adjust the RMC configuration of the transmit channel and the RMC configuration of the receive channel of the first transceiver to the preset configuration, and the second transceiver adjusts the RMC configuration of the transmit channel to the preset configuration after the (K1+N')^{th} logical frame, and adjusts the RMC configuration of the receive channel to the preset configuration after the (K1+N)^{th} logical frame.

5. The method according to claim 4, wherein the first RMC message is represented by one bit, and a specific value is used to instruct the first transceiver to adjust the RMC configuration of the transmit channel and the RMC configuration of the receive channel to the preset configuration.

6. The method according to claim 1, wherein in the preset configuration, higher robustness of a transmission channel is ensured by setting different parameters in at least one of three items: an RMC carrier set, an RMC bit loading table, and an RMC coding scheme.

7. The method according to any one of claims 1 to 6, wherein the first RMC message comprises a number of the K1^{th} logical frame.

8. The method according to any one of claims 1 to 7, wherein the second RMC message comprises a number of the K2^{th} logical frame.

9. A transceiver, comprising a transmitter 301, a receiver 303, and a processor 305, wherein
the receiver 303 receives at least one portion of a K1^{th} logical frame from a peer device, wherein the at least one portion of the K1^{th} logical frame comprises a first RMC message;
if the processor 305 cannot correctly parse the RMC message received by the receiver 303, the processor 305 instructs the transmitter 301 to send a K2^{th} logical frame to the peer device, wherein the K2^{th} logical frame comprises a second RMC message, and the second RMC message instructs the peer device to adjust RMC configuration of a transmit channel and RMC configuration of a receive channel of the peer device to preset configuration; and
the processor 305 adjusts RMC configuration of a transmit channel of the transmitter 301 to the preset configuration after a (K1+N)^{th} logical frame, and adjusts RMC configuration of a receive channel of the receiver 303 to the preset configuration after a (K1+N')^{th} logical frame, wherein N and N' are preset positive integers.

10. The transceiver according to claim 9, wherein the second RMC message is represented by one bit, and a specific value is used to instruct the peer device to adjust the RMC configuration of the transmit channel and the RMC configuration of the receive channel to the preset configuration.

11. The transceiver according to claim 9 or 10, wherein the first RMC message also comprises instruction information, instructing the transceiver to adjust the RMC configuration of the transmit channel of the transmitter 301 and the RMC configuration of the receive channel of the receiver 303 to the preset configuration.

12. The transceiver according to claim 11, wherein the first RMC message is represented by one bit, and a specific value is used to instruct the transceiver to adjust the RMC configuration of the transmit channel of the transmitter 301 and the RMC configuration of the receive channel of the receiver 303 to the preset configuration.

13. The transceiver according to any one of claims 9 to 12, wherein the second RMC message is represented by one bit, and a specific value is used to instruct the peer device to adjust the RMC configuration of the transmit channel and the RMC configuration of the receive channel to the preset configuration.

14. The transceiver according to any one of claims 9 to 13, wherein the first RMC message comprises a number of the K1^{th} logical frame, namely, K1.

15. The transceiver according to any one of claims 9 to 14, wherein the second RMC message comprises a number of the K2^{th} logical frame, namely, K2.

16. The transceiver according to any one of claims 9 to 15, wherein in the preset configuration, higher robustness of a transmission channel is ensured by setting different parameters in at least one of three items: an RMC carrier set, an RMC bit loading table, or an RMC coding scheme.

17. A network system 40, comprising a network-side device 401 and K user-side devices 402, wherein K ≥ 1, the network-side device 401 is connected to the K user-side devices 402 by using K pairs of twisted-pair cables 403, the network-side device 401 comprises K network-side transceivers 4011, each user-side device 402 comprises one user-side transceiver 4021, and the network-side transceiver 4011 or the user-side transceiver 4021 is the transceiver 30 according to any one of claims 9 to 16.
